# EUROPEAN PATENT APPLICATION

(11) **EP 4 506 694 A1**
(43) Date of publication of application: **12.02.2025**
(21) Application number: 23784806.4
(22) Date of filing: 06.04.2023
(51) Int. Cl.: G01N 35/00, G01N 35/02

(54) **AUTOMATIC ANALYSIS DEVICE**

(30) Priority: 07.04.2022 JP 2022063923
(71) Applicant: HITACHI HIGH-TECH CORPORATION, Tokyo 105-6409 (JP)
(72) Inventor: MUKAI, Fuyuki, Tokyo 105-6409 (JP); YABUTANI, Chie, Tokyo 105-6409 (JP)
(74) Representative: Strehl Schübel-Hopf & Partner
(86) International application number: PCT/JP2023/014261
(87) International publication number: WO 2023/195522

(57) **Abstract**

Provided is an automatic analysis device having an incubation function. An example of the automatic analysis device includes: a reaction vessel storage section where a reaction vessel storage container that stores reaction vessels is installed; and a dispensing mechanism that dispenses specimens or reagents into a reaction vessel which was removed from the reaction vessel storage container. The reaction vessel storage section has a temperature-controlled area where at least a portion of the storage section is adjusted to a prescribed temperature. The reaction vessel into which a specimen or a reagent is dispensed by the dispensing mechanism is placed in a reaction vessel storage container installed in the temperature-controlled area for a prescribed period.

## Description

### Technical Field

The present invention relates to an automatic analysis device that analyzes a sample (specimen) such as blood or urine.

### Background Art

In the automatic analysis device that analyzes biological samples such as blood and urine, the number of specimens to be analyzed per unit time and the number of tests available for analysis are important. In an analysis cycle of the automatic analysis device, a single specimen or single reagent, or a mixed liquid of multiple specimens or a mixed liquid of specimens and reagents is held for a prescribed time and temperature before analysis. However, depending on a type of analysis, it may be necessary to freely shorten or extend a holding time or temperature.

For this reason, PTL 1 discloses that a device is provided with an incubation function for maintaining a temperature, and a container after a lapse of a prescribed temperature-controlled time is transferred to a detection position.

### Citation List

### Patent Literature

PTL 1: JP2021-119351A

### Summary of Invention

### Technical Problem

When the automatic analysis device is provided with the incubation function and a transfer mechanism for the incubation function as in PTL 1, the device may be increased in size or processing capability may be reduced.

An object of the invention is to provide a compact automatic analysis device having the incubation function.

### Solution to Problem

In order to solve the above problem, an automatic analysis device according to one embodiment of the invention includes: a reaction vessel storage section where a reaction vessel storage container that stores a reaction vessel is to be provided; and a dispensing mechanism configured to dispense a specimen or a reagent into a reaction vessel removed from the reaction vessel storage container. The reaction vessel storage section has a temperature-controlled area where at least a portion of the reaction vessel storage section is adjusted to a prescribed temperature. The reaction vessel into which the specimen or the reagent is dispensed by the dispensing mechanism is placed in a reaction vessel storage container provided in the temperature-controlled area for a prescribed period.

### Advantageous Effects of Invention

Provided is an automatic analysis device having an incubation function. Problems, configurations, and effects other than those described above will be clarified by the description of the following embodiments.

### Brief Description of Drawings

[FIG. 1] FIG. 1 is a system block diagram showing an entire automatic analysis device capable of performing blood coagulation measurement.
[FIG. 2] FIG. 2 is a schematic diagram of an automatic analysis device capable of blood coagulation measurement and biochemical measurement.
[FIG. 3] FIG. 3 is an example of an operation sequence of a transfer device.
[FIG. 4A] FIG. 4A is a diagram showing an operation of a transfer device.
[FIG. 4B] FIG. 4B is a diagram showing an operation of the transfer device.
[FIG. 4C] FIG. 4C is a diagram showing an operation of the transfer device.
[FIG. 4D] FIG. 4D is a diagram showing an operation of the transfer device.
[FIG. 4E] FIG. 4E is a diagram showing an operation of the transfer device.
[FIG. 4F] FIG. 4F is a diagram showing an operation of the transfer device.
[FIG. 4G] FIG. 4G is a diagram showing an operation of the transfer device.
[FIG. 4H] FIG. 4H is a diagram showing an operation of the transfer device.
[FIG. 4I] FIG. 4I is a diagram showing an operation of the transfer device.
[FIG. 5A] FIG. 5A is a diagram showing a lid mechanism of a reaction vessel storage section.
[FIG. 5B] FIG. 5B is a diagram showing a lid mechanism of the reaction vessel storage section.
[FIG. 6] FIG. 6 is a diagram showing a lid mechanism of the reaction vessel storage section.
[FIG. 7] FIG. 7 is a diagram showing a lid mechanism of the reaction vessel storage section.
[FIG. 8] FIG. 8 is a diagram showing how a reaction vessel is used to prevent evaporation of a specimen in a reaction vessel.
[FIG. 9A] FIG. 9A is a diagram showing an operation for preventing a decrease in heat retention efficiency of a temperature-controlled mechanism of the reaction vessel storage section.
[FIG. 9B] FIG. 9B is a diagram showing an operation for preventing a decrease in heat retention efficiency of the temperature-controlled mechanism of the reaction vessel storage section.
[FIG. 10] FIG. 10 is a diagram showing a temperature-controlled mechanism of the reaction vessel storage section.
[FIG. 11] FIG. 11 is a diagram showing a temperature-controlled mechanism of the reaction vessel storage section.
[FIG. 12] FIG. 12 is a diagram showing a temperature-controlled mechanism of the reaction vessel storage section.
[FIG. 13] FIG. 13 is a diagram showing a sample disk.
[FIG. 14] FIG. 14 is a diagram showing the sample disk and a sample dispensing mechanism.
[FIG. 15] FIG. 15 is a diagram showing a temperature-controlled mechanism of the sample disk.
[FIG. 16] FIG. 16 is a diagram showing a temperature-controlled mechanism of the sample disk.
[FIG. 17] FIG. 17 is a diagram showing a temperature-controlled mechanism of the sample disk.
[FIG. 18] FIG. 18 is a diagram showing an example of a temperature-controlled area provided on the sample disk.
[FIG. 19] FIG. 19 is an example of a measurement flow when the reaction vessel storage section includes a temperature-controlled mechanism.
[FIG. 20] FIG. 20 is an example of a measurement flow when the sample disk includes a temperature-controlled mechanism.
[FIG. 21] FIG. 21 is an example of a temperature control setting screen.
[FIG. 22] FIG. 22 is an example of a temperature log screen.

### Description of Embodiments

Hereinafter, an embodiment of the invention will be described with reference to the drawings.

### Embodiment 1

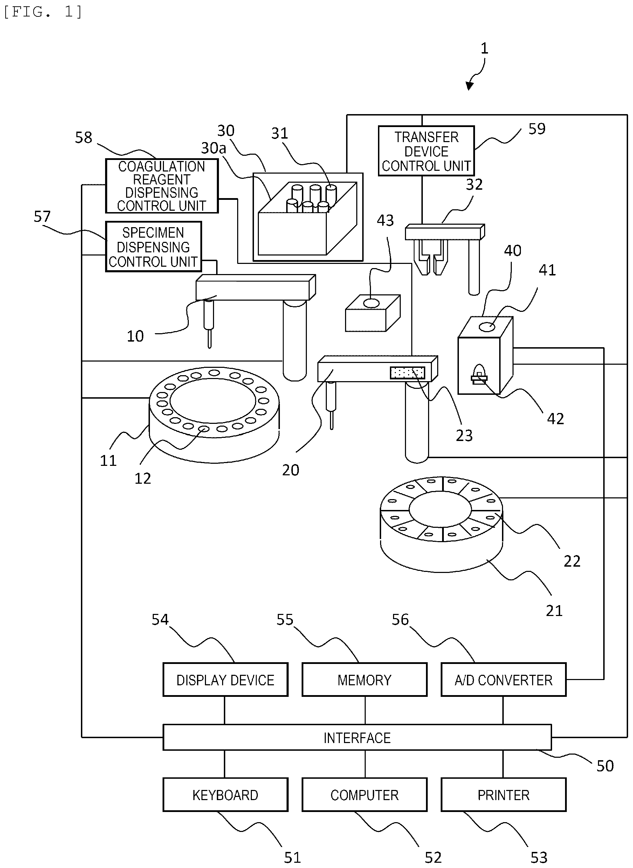

FIG. 1 is a system block diagram showing the entirety of an automatic analysis device capable of performing blood coagulation measurement according to one embodiment of the invention. As shown in FIG. 1, an automatic analysis device 1 mainly includes a sample dispensing mechanism 10, a sample disk 11, a coagulation reagent dispensing mechanism 20, a reagent disk 21, a reaction vessel storage section 30, a transfer device 32, a coagulation time measurement unit 40, and a computer (control unit) 52.

An arm capable of gripping a reaction vessel 31 is attached to the transfer device 32. The transfer device 32 can move among the reaction vessel storage section 30, a coagulation specimen dispensing unit 43, and the coagulation time measurement unit 40, and can transfer and place the reaction vessel 31 to a prescribed location. The reaction vessel 31 is a vessel that mixes a specimen with a reagent and reacts the mixed liquid.

The sample disk 11 can be intermittently rotated clockwise and counterclockwise, and a plurality of sample vessels 12 storing biological samples such as blood are placed on the sample disk 11. The sample dispensing mechanism 10 is disposed near the sample disk 11. The sample dispensing mechanism 10 can rotate clockwise and counterclockwise between the sample disk 11 and the coagulation specimen dispensing unit 43. The sample dispensing mechanism 10 aspirates a sample (specimen) in the sample vessel 12 using a probe attached to a distal end of the sample dispensing mechanism 10, and discharges the sample to the reaction vessel 31 on the coagulation specimen dispensing unit 43.

A plurality of reagent vessels 22 corresponding to analysis items of the automatic analysis device 1 are placed on the reagent disk 21. The coagulation reagent dispensing mechanism 20 aspirates a reagent in the reagent vessel 22 and discharges the reagent into the reaction vessel 31. A reagent heating mechanism 23 is built into the coagulation reagent dispensing mechanism 20, and the reagent aspirated by the coagulation reagent dispensing mechanism 20 is heated to a prescribed temperature (appropriate temperature) by the reagent heating mechanism 23.

One or more reaction vessel storage containers 30a that store the reaction vessel 31 are provided in the reaction vessel storage section 30. The reaction vessel storage container 30a is formed with a large number of through holes (reaction vessel storage positions), and the reaction vessel 31 is inserted into the through holes.

The coagulation specimen dispensing unit 43 is formed with a recess on which the reaction vessel 31 is placed, and the reaction vessel 31 is inserted into the recess.

The coagulation time measurement unit 40 includes a coagulation time detection unit 41 formed with the recess on which the reaction vessel 31 is placed. A light source 42 irradiates the reaction vessel 31 placed on the coagulation time detection unit 41 with light. The light emitted from the light source 42 is scattered in the reaction vessel 31, and the scattered light is received by a photodiode provided in the coagulation time detection unit 41. An analog signal of the measured scattered light is input to an A/D converter 56. A coagulation time is measured based on a digital signal output from the A/D converter. In this way, a coagulation time of a mixed liquid in the reaction vessel 31 placed on the coagulation time measurement unit 40 can be measured.

Next, a control system and a signal processing system in the automatic analysis device 1 in FIG. 1 will be briefly described. The computer (control unit) 52 is connected to a specimen dispensing control unit 57, a coagulation reagent dispensing control unit 58, a transfer device control unit 59, and the A/D converter 56 via an interface 50. The computer 52 sends a command to the control units to control operations. That is, the computer 52 can control a transfer device, a dispensing mechanism, and the like via the control units of the mechanisms.

A printer 53 for printing, a memory 55 as a storage device, a keyboard 51 for inputting an operation command and the like, and a display device 54 for displaying a screen such as a CRT display or a liquid crystal display are connected to the interface 50. The memory 55 includes, for example, a hard disk memory or an external memory. The memory 55 stores information such as analysis parameters, analysis item requests, a calibration result, and an analysis result.

Next, blood coagulation measurement will be described. When an operator requests analysis from the computer 52, the transfer device 32 transfers the reaction vessel 31 stored in the reaction vessel storage section 30 to the coagulation specimen dispensing unit 43 and places the reaction vessel 31 thereon. Subsequently, the sample dispensing mechanism 10 suctions the specimen to be used for analysis from the sample vessel 12 on the sample disk 11, and discharges the specimen to the reaction vessel 31 on the coagulation specimen dispensing unit 43. The reaction vessel 31 into which the specimen has been dispensed is transferred and placed on the coagulation time detection unit 41 by the transfer device 32. Thereafter, when the reagent is discharged into the reaction vessel 31 on the coagulation time detection unit 41 by the coagulation reagent dispensing mechanism 20, the specimen and the reagent are mixed, and a blood coagulation reaction starts.

The reaction vessel 31 on the coagulation time detection unit 41 is irradiated with light from the light source 42. The coagulation time measurement unit 40 receives the scattered light, and an A/D-converted measurement value is taken into the computer 52 through the interface 50. A measurement result is outputted by the printer 53 or the display device 54.

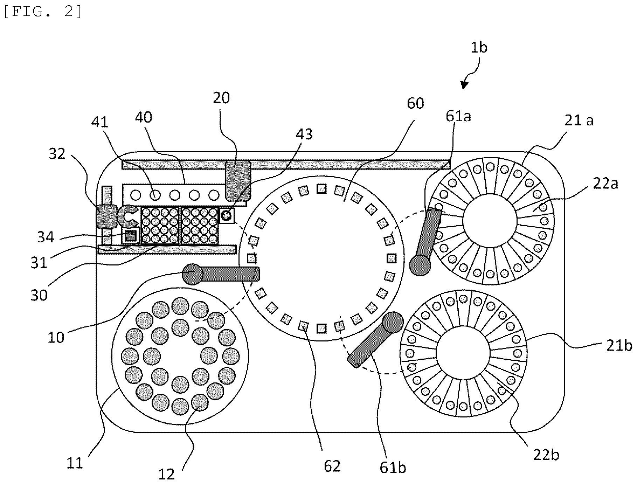

FIG. 2 is a schematic diagram of an automatic analysis device 1b including a blood coagulation measurement unit and an absorbance measurement unit capable of biochemical measurement according to one embodiment of the invention. In FIG. 2, the control system and the signal processing system are omitted. The same mechanisms as those shown in FIG. 1 are denoted by the same reference signs, and redundant description thereof will be omitted. The automatic analysis device 1b includes a reaction disk 60 including a plurality of reaction cells (second reaction vessel) 62 used for the biochemical measurement, and reagent dispensing mechanisms 61a and 61b, and the sample dispensing mechanism 10 is shared between a blood coagulation test and a biochemical test. In a configuration in FIG. 2, a plurality of (six in this example) coagulation time detection units 41 are provided in the coagulation time measurement unit 40. In such a configuration, a reagent for the blood coagulation test can be aspirated from reagent disks 21a and 21b to the coagulation reagent dispensing mechanism 20 via a reaction cell 62, and a temperature of the reagent can be efficiently increased before being discharged to the reaction vessel 31. This is because the reaction cell 62 is kept at about 37°C in a thermostatic chamber.

The reaction vessel storage section 30 of the automatic analysis device 1b includes a temperature-controlled area in which a temperature of the reaction vessel storage section 30 is adjusted to a prescribed temperature, and two reaction vessel storage containers are provided. Although a configuration of the reaction vessel storage section 30 will be described later, the temperature-controlled area may be the entire reaction vessel storage section 30 or may be only a part thereof. The reaction vessel storage container is formed with a large number of through holes (reaction vessel storage positions) into which the reaction vessel 31 is inserted, and the empty reaction vessel 31 used for the blood coagulation measurement is placed in advance. The reaction vessel storage container is detachable from the reaction vessel storage section 30, for example, when the reaction vessel storage container becomes empty, the operator removes the empty reaction vessel storage container from the reaction vessel storage section 30 and provides a new reaction vessel storage container in which the reaction vessel 31 is stored in advance.

Here, an operation sequence of the transfer device 32 when blood coagulation time measurement accompanied by applying prescribed temperature control to a specimen is performed will be described in one embodiment of the invention.

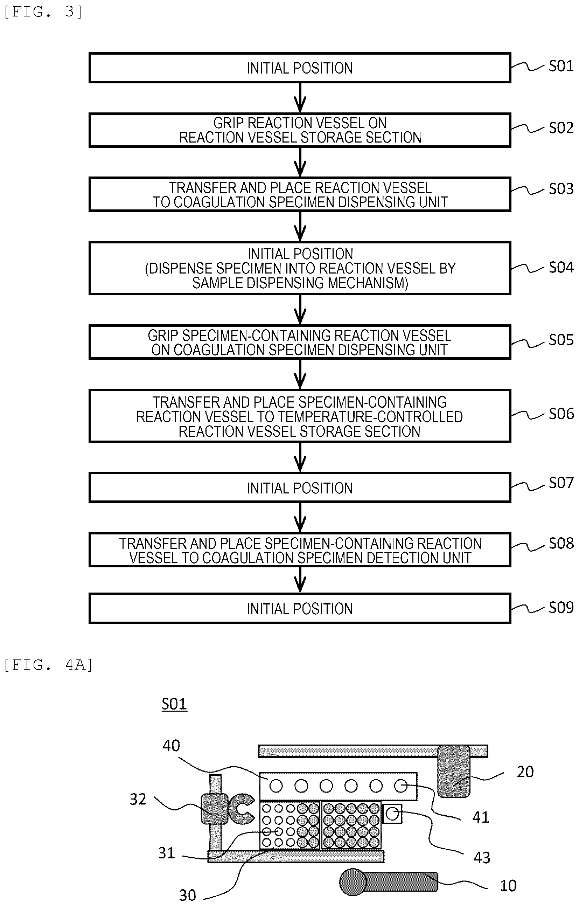

FIG. 3 shows an operation sequence of the transfer device 32 when the operator registers a request for analyzing blood coagulation items and starts analysis. Operations of the transfer device 32 in steps are shown in FIGS. 4A to 4I.

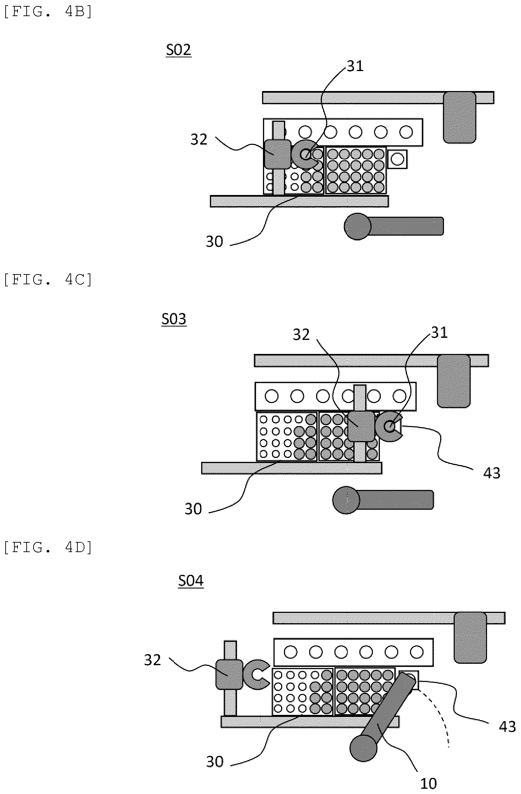

The transfer device 32 stops with the upper left of the reaction vessel storage section 30 as a transfer device initial position (S01, FIG. 4A). When the analysis is started, the transfer device 32 grips the empty reaction vessel 31 placed on the reaction vessel storage section 30 (S02, FIG. 4B), and transfers and places the reaction vessel 31 to and on the coagulation specimen dispensing unit 43 (S03, FIG. 4C). Next, the transfer device 32 moves to the initial position, and the sample dispensing mechanism 10 dispenses a single specimen or a plurality of specimens into the reaction vessel 31 on the coagulation specimen dispensing unit 43 (S04, FIG. 4D).

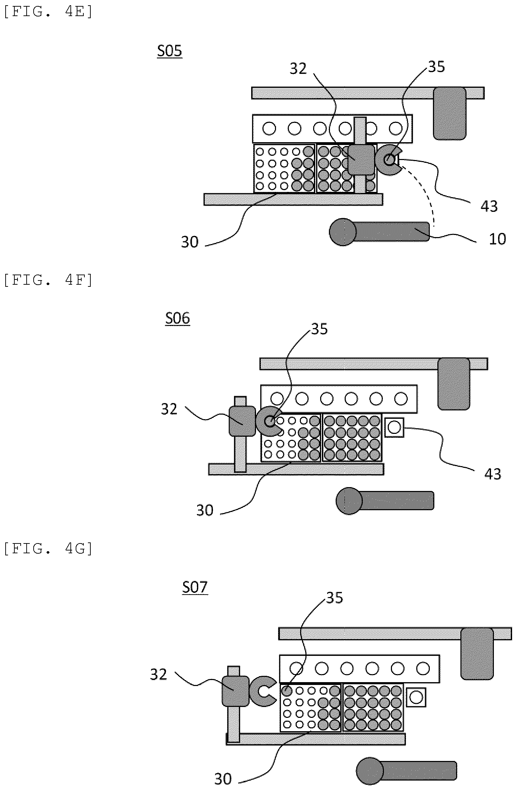

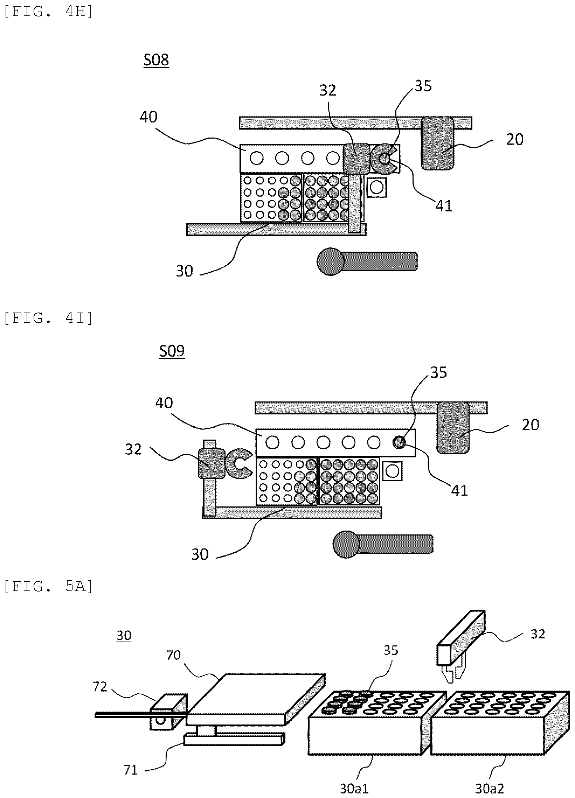

Thereafter, the transfer device 32 grips a specimen-containing reaction vessel 35 on the coagulation specimen dispensing unit 43 (S05, FIG. 4E), and transfers and places the specimen-containing reaction vessel 35 to and on the temperature-controlled reaction vessel storage section 30 (for example, the reaction vessel storage container on the left side is temperature-controlled) (S06, FIG. 4F). Thereafter, the transfer device 32 moves to the initial position (S07, FIG. 4G). The specimen-containing reaction vessel 35 is placed on the temperature-controlled reaction vessel storage section 30 and held at a prescribed temperature for a prescribed period (incubation). After the specimen-containing reaction vessel 35 before the analysis in the reaction vessel 35 has passed a prescribed temperature control period, the transfer device 32 grips the specimen-containing reaction vessel 35 placed on the reaction vessel storage section 30, and transfers and places the specimen-containing reaction vessel 35 to and on the coagulation time detection unit 41 (S08, FIG. 4H). After the transfer device 32 moves to the initial position (S09, FIG. 4I), the coagulation reagent dispensing mechanism 20 discharges the reagent to the reaction vessel 31 on the coagulation time detection unit 41, and a coagulation reaction is started. After the coagulation reaction is completed, the transfer device 32 grips the reaction vessel 31 for which photometry has been completed, and discards the reaction vessel after measurement by a reaction vessel discarding unit 34.

The above operations of the transfer device 32 are performed by being controlled by the transfer device control unit 59 from the computer 52 via the interface 50.

The operation sequence in FIG. 3 shows an example in which an object of incubation is a specimen or a mixed specimen. Alternatively, the reagent dispensed into the reaction vessel 31 or a mixed liquid of a reagent and a specimen may be the object of incubation. In this case, similarly, after dispensing the reagent or the specimen, the reaction vessel containing the reagent or the mixed liquid of the reagent and the specimen is transferred to and placed on the temperature-controlled reaction vessel storage section 30, and a prescribed temperature control period may be elapsed. In the configuration in FIG. 1, the reagent is dispensed into the reaction vessel 31 placed on the coagulation time measurement unit 40 by the coagulation reagent dispensing mechanism 20. In the configuration in FIG. 2, there may be a plurality of dispensing methods. In addition to the coagulation reagent dispensing mechanism 20 aspirating a reagent from the reagent disk 21a and discharging the reagent to the reaction vessel 31 placed on the coagulation time measurement unit 40, it is possible to dispense the reagent from the reagent disk 21a (21b) to the reaction cell 62 on the reaction disk 60 by the reagent dispensing mechanism 61a (61b), further dispense the reagent from the reaction cell 62 to the reaction vessel 31 placed on the coagulation time measurement unit 40 by the coagulation reagent dispensing mechanism 20, or dispense the reagent from the reaction cell 62 to the reaction vessel 31 placed on the coagulation specimen dispensing unit 43 by the sample dispensing mechanism 10.

Hereinafter, a configuration of the reaction vessel storage section 30 will be described. A temperature at which a specimen is held during incubation in the reaction vessel storage section 30 is higher than room temperature, and there is a risk that the specimen evaporates from the reaction vessel, resulting in a high specimen concentration. Therefore, the reaction vessel storage section 30 is provided with a lid mechanism for preventing evaporation of the specimen. It is contemplated to provide a lid for preventing evaporation for each reaction vessel, but in order to make the configuration as simple as possible, in the present embodiment, a lid mechanism for covering at least an area (incubation area) used for incubation in the reaction vessel storage section 30 is provided in the reaction vessel storage section 30.

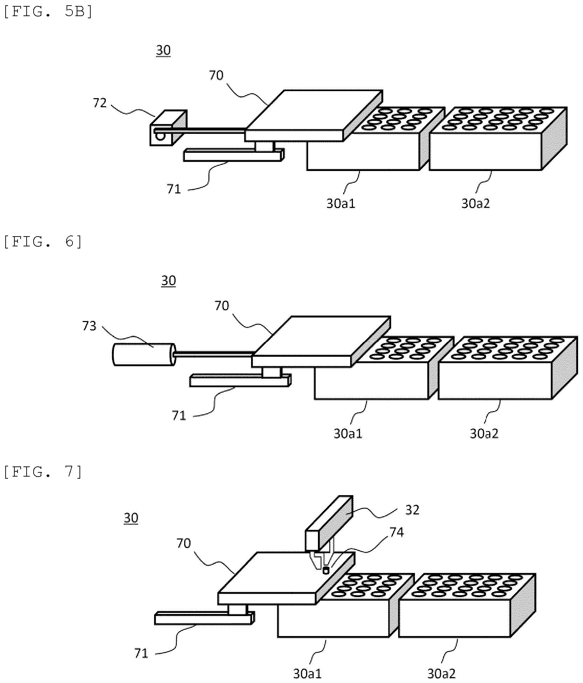

A storage section lid 70 moves between a lid standby position and an incubation area of the reaction vessel storage section 30 via a slide rail 71 one of which is connected to the automatic analysis device and the other of which is connected to the storage section lid 70. FIG. 5A shows a state where the storage section lid 70 is at the lid standby position, and FIG. 5B shows a state where the storage section lid 70 covers the incubation area. Here, an example is shown in which two rows on the left side of the reaction vessel storage container 30a1 provided on the left side of the storage section are set as the incubation area. The specimen-containing reaction vessel 35 transferred to the incubation area of the reaction vessel storage section 30 by the transfer device 32 is covered with the storage section lid 70, so that evaporation of a liquid contained in the reaction vessel 35 can be prevented.

The storage section lid 70 is driven by a motor 72. When the transfer device 32 grips the empty reaction vessel 31 on the reaction vessel storage section 30, when the transfer device 32 places the specimen-containing reaction vessel 35 to the reaction vessel storage section 30, or when the transfer device 32 grips the specimen-containing reaction vessel 35 in the reaction vessel storage section 30, the motor 72 drives the storage section lid 70 to store the storage section lid 70 in the lid standby position. When the transfer device 32 is separated from the reaction vessel storage section 30, the motor 72 is driven such that the storage section lid 70 covers the incubation area.

It is not desirable that dew condensation occurs on the storage section lid 70 during incubation of the specimen-containing reaction vessel 35. Therefore, a heat insulating material may be provided on a surface of the storage section lid 70 facing the incubation area of the reaction vessel storage section 30, or a heating mechanism that heats the storage section lid 70 to the same temperature as the temperature of a temperature-controlled area of the reaction vessel storage section 30 may be provided.

A drive mechanism of the storage section lid 70 is not limited to a motor, and may be driven by a cylinder 73 as shown in FIG. 6. As shown in FIG. 7, instead of providing a drive mechanism dedicated to the storage section lid 70, a knob 74 provided on the storage section lid 70 may be gripped by the transfer device 32 and moved by power of the transfer device 32.

With a further simple mechanism for preventing the evaporation of the specimen during incubation, the transfer device 32 can also grip the empty reaction vessel 31 placed on the reaction vessel storage container 30a and stack the empty reaction vessel 31 on the specimen-containing reaction vessel 35 to prevent the evaporation of the specimen during the incubation. The reaction vessel 31 used as a simple lid is likely to have dew condensation on the outer wall thereof, and is discarded after use to prevent contamination.

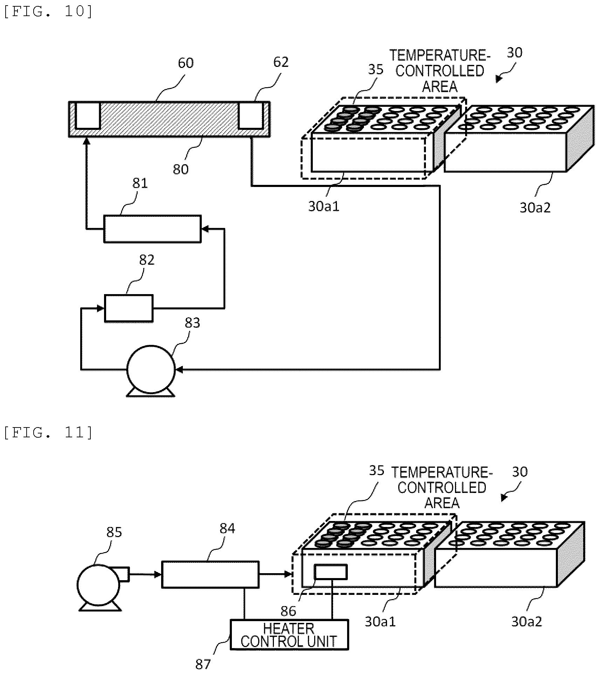

Next, a temperature-controlled mechanism of the reaction vessel storage section 30 will be described. The temperature-controlled mechanism in FIG. 10 extends a flow path of a thermostatic chamber 80 for controlling a temperature of the reaction cell 62 on the reaction disk 60 as a heat source of the temperature-controlled mechanism. In order to keep a water temperature in the thermostatic chamber 80 constant (about 37°C), system water in the thermostatic chamber 80 is heated and circulated through a flow path provided with a heater 81, a filter 82, a circulation pump 83, and the like. In a configuration in FIG. 10, the flow path is extended to the temperature-controlled area of the reaction vessel storage section 30, and system water in the flow path is used as a heat source. Accordingly, since a heat source and temperature control for the thermostatic chamber 80 can be used, a temperature-controlled function can be easily achieved.

The temperature-controlled mechanism of the reaction vessel storage section 30 may be provided independently of the thermostatic chamber 80. In this case, a temperature of the reaction vessel storage section 30 can be adjusted to a temperature different from a temperature of the thermostatic chamber 80. Further, when heating of a reaction vessel is unnecessary, that is, when the incubation is not performed, it is possible not to perform temperature control. Further, an independent temperature-controlled mechanism may be provided instead of the temperature-controlled mechanism in FIG. 10, or an auxiliary independent temperature-controlled mechanism may be provided in addition to the temperature-controlled mechanism in FIG. 10.

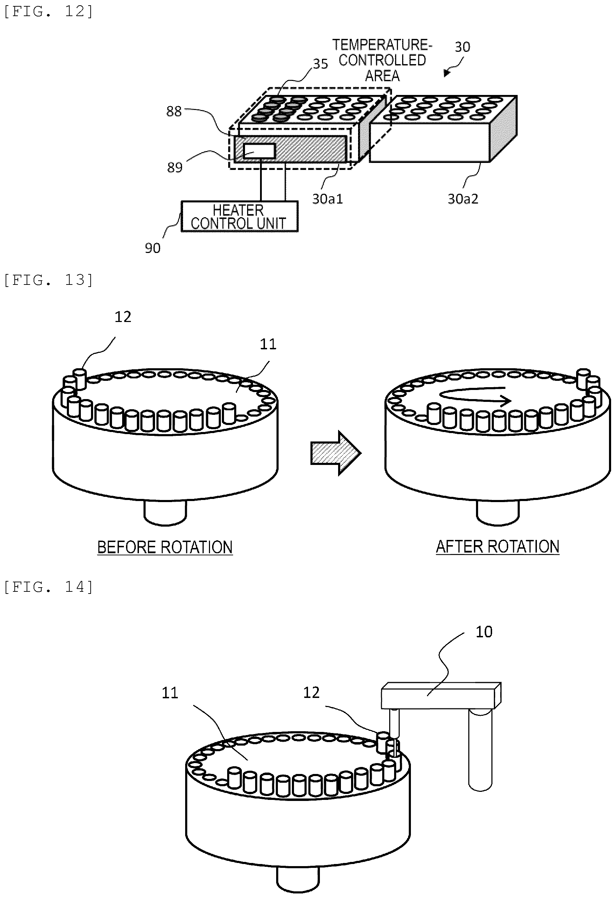

FIG. 11 shows a first example in which warm air is used as a heat source. The air warmed by a heater 84 is blown to the temperature-controlled area of the reaction vessel storage section 30 by a blower 85. A temperature sensor 86 is provided in the temperature-controlled area, and a heater control unit 87 controls a temperature of the heater 84 according to a temperature of the temperature-controlled area measured by the temperature sensor 86. FIG. 12 shows a second example in which an electric heater 88 is provided in the temperature-controlled area of the reaction vessel storage section 30. The electric heater 88 is provided with a temperature sensor 89 such as a thermistor, and a heater control unit 90 controls a temperature of the electric heater 88 according to a temperature detected by the temperature sensor 89. FIG. 12 shows an example in which the electric heater 88 is disposed on a side surface of the reaction vessel storage container 30a1. Alternatively, the electric heater 88 may be provided on a bottom surface, or on both the side surface and the bottom surface. The control by the heater control unit can also be performed by the computer (control unit) 52.

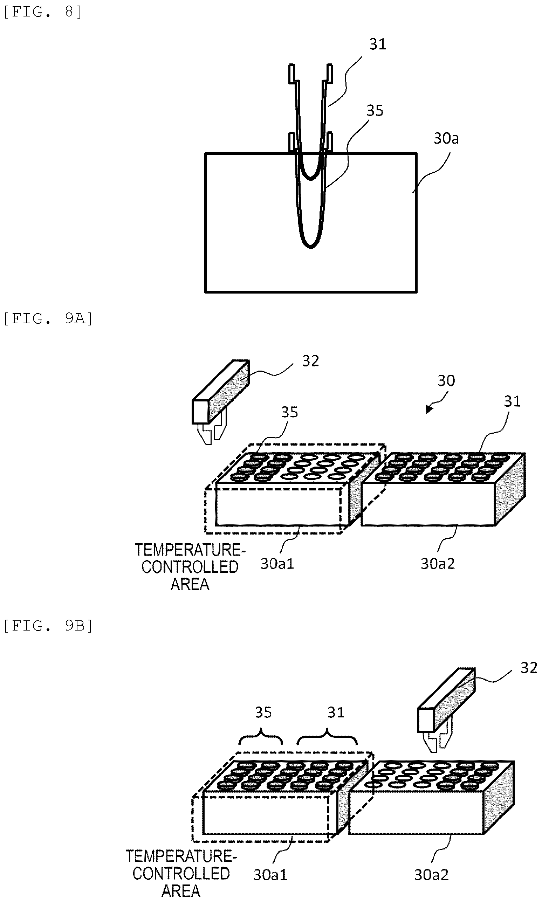

As described above, the reaction vessel storage container 30a is formed with through holes that are storage positions for reaction vessels. Therefore, when a temperature of a part of the reaction vessel storage section 30 is controlled, even if the temperature-controlled area is heated, the warmed air in the reaction vessel storage container 30a escapes from the through holes, and thus heat retention efficiency is lowered. FIG. 9A is an example in which the reaction vessel storage containers 30a1 and 30a2 are placed on the reaction vessel storage section 30, and the reaction vessel storage container 30a1 provided on the left side is set as a temperature-controlled area. In this example, the three rows of reaction vessels on the right side of reaction vessel storage container 30a1 have been used, the inside and outside of the reaction vessel storage container 30a1 are conducted through the through holes in which the reaction vessels are provided, and the warmed air leaks out from the reaction vessel storage container 30a1 side. Therefore, as shown in FIG. 9B, the transfer device 32 grips the empty reaction vessel 31 placed on the reaction vessel storage container 30a2 outside the temperature-controlled area of the reaction vessel storage section 30, moves the empty reaction vessel 31 to an empty reaction vessel storage position of the temperature-controlled reaction vessel storage container 30a1, and places the reaction vessel 31 therein, thereby sealing the through holes and maintaining heat retention efficiency.

### Embodiment 2

In the present embodiment, a temperature-controlled area is formed in a sample disk. Embodiment 2 is the same as Embodiment 1 except for a position where the temperature-controlled area is formed, the same components as those of Embodiment 1 are denoted by the same reference signs, and redundant description thereof will be omitted. A configuration of an automatic analysis device may be the configuration of the automatic analysis device 1 capable of performing blood coagulation measurement described with reference to FIG. 1 or the configuration of the automatic analysis device 1b including the blood coagulation measurement unit and the absorbance measurement unit capable of the biochemical measurement described with reference to FIG. 2.

A structure of the sample disk is the same as that of Embodiment 1. As shown in FIG. 13, the sample disk 11 may be intermittently rotated clockwise and counterclockwise, and a plurality of sample vessels 12 containing biological samples such as blood are placed thereon. As shown in FIG. 14, the sample dispensing mechanism 10 is disposed near the sample disk 11.

The sample dispensing mechanism 10 aspirates a sample (specimen) in the sample vessel 12 placed on the sample disk 11 using a probe attached to a distal end of the sample dispensing mechanism 10, and discharges the sample to another empty sample vessel 12 on the sample disk 11. The sample dispensing mechanism 10 aspirates the sample (specimen) in the sample vessel 12 placed on the sample disk 11 using the probe attached to the distal end of the sample dispensing mechanism 10, and discharges the sample to the reaction cell 62 provided in the reaction disk 60 or the reaction vessel 31 on the coagulation specimen dispensing unit 43.

The sample disk 11 of the automatic analysis device 1 (1b) includes a temperature-controlled area in which a temperature of the sample disk 11 is adjusted to a prescribed temperature. A configuration of the sample disk 11 including the temperature-controlled area will be described later. Alternatively, the temperature-controlled area may be formed in the entire sample disk 11 or may be formed in a part of the sample disk 11.

An object of incubation on the sample disk 11 is a specimen or mixed specimen in the sample vessel 12 placed on the sample disk 11, or a specimen or mixed specimen discharged by the sample dispensing mechanism 10. Alternatively, a reagent or a mixed liquid of a reagent and a specimen may be subjected to incubation. In this case, similarly, after dispensing the reagent or the specimen, the sample vessel 12 containing the reagent or the mixed liquid of the reagent and the specimen may be left on the temperature-controlled sample disk 11 for a prescribed temperature control period.

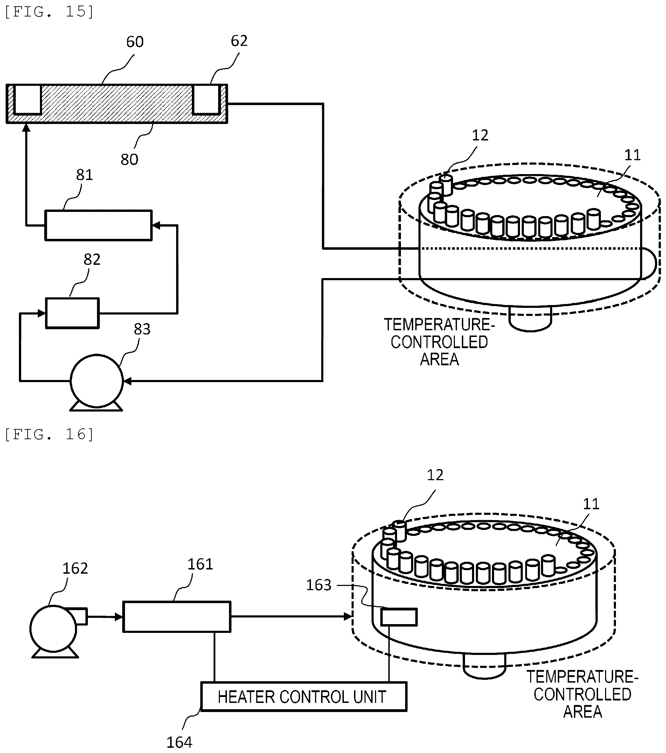

Next, a temperature-controlled mechanism of the sample disk 11 will be described. The temperature-controlled mechanism in FIG. 15 extends a flow path of the thermostatic chamber 80 for controlling a temperature of the reaction cell 62 on the reaction disk 60 as a heat source of the temperature-controlled mechanism. In order to keep a water temperature in the thermostatic chamber 80 constant (about 37°C), system water in the thermostatic chamber 80 is heated and circulated through a flow path provided with the heater 81, the filter 82, the circulation pump 83, and the like. In a configuration in FIG. 15, the flow path is extended to the temperature-controlled area of the sample disk 11, and system water in the flow path is used as a heat source. Accordingly, since a heat source and temperature control for the thermostatic chamber 80 can be used, a temperature-controlled function can be easily achieved.

The temperature-controlled mechanism of the sample disk 11 may be provided independently of the thermostatic chamber 80. In Embodiment 2, an independent temperature-controlled mechanism may also be provided instead of the temperature-controlled mechanism in FIG. 15, or an auxiliary independent temperature-controlled mechanism may also be provided in addition to the temperature-controlled mechanism in FIG. 15.

FIG. 16 shows a first example in which warm air is used as a heat source. The air warmed by a heater 161 is blown to the temperature-controlled area of the sample disk 11 by a blower 162. A temperature sensor 163 is provided in the temperature-controlled area, and a heater control unit 164 controls a temperature of the heater 161 according to a temperature of the temperature-controlled area measured by the temperature sensor 163.

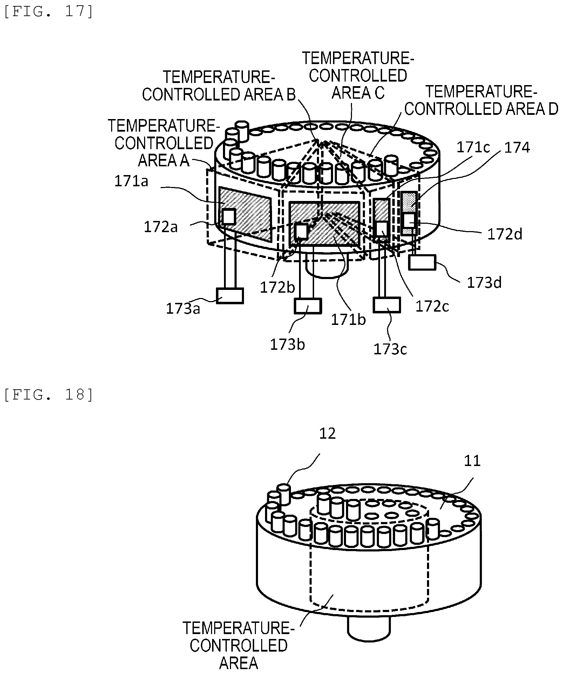

FIG. 17 shows a second example in which an electric heater 171 is provided in the temperature-controlled area of the sample disk 11. The electric heater 171 is provided with a temperature sensor 172 such as a thermistor, and a heater control unit 173 controls a temperature of the electric heater 171 according to a temperature detected by the temperature sensor 172. The control by the heater control unit 173 can also be performed by the computer (control unit) 52. In FIG. 17, the heater control unit 173 is provided for each temperature-controlled area. Alternatively, the plurality of electric heaters 171 and the plurality of temperature sensors 172 provided in the plurality of temperature-controlled areas may be controlled by one heater control unit 173. When one or more electric heaters 171 are connected to a main body by wiring at a rotating portion of the sample disk 11, wiring may be performed by a slip ring.

By providing such an independent temperature-controlled mechanism, a temperature of the sample disk 11 can be adjusted to a temperature different from the temperature of the thermostatic chamber 80. Further, when heating of the sample vessel 12 is unnecessary, that is, when the incubation is not performed, it is possible not to perform temperature control.

The temperature-controlled area may be formed in a part of the sample disk 11 or in the entire sample disk 11. Further, one or more temperature-controlled areas may be formed in the sample disk 11, and when a plurality of temperature-controlled areas are formed, a size of the area may be changed for each temperature-controlled area. When a plurality of temperature-controlled areas are formed, a temperature may be changed for each temperature-controlled area.

The sample disk 11 shown in FIG. 17 is an example in which four temperature-controlled areas A to D are formed in a part of the sample disk 11. The temperature sensor 172 is provided in the electric heater 171 in each temperature-controlled area, and is controlled by the heater control unit 173. While the temperature is controlled by the electric heater 171 in the temperature-controlled areas A to C, a Peltier element 174 is used as a heat source in the temperature-controlled area D. By using the Peltier element, it is possible to not only heat but also cool the specimen, making it possible to use a part of a reagent disk as a refrigerator that stores the specimen. The case of using as the refrigerator is, for example, a case of storing a quality control specimen or a calibrator used for calibration. In this case, calibration for quality control can be automatically performed at any timing during an analysis operation, and incubation at a high temperature can be simultaneously performed. Further, although not shown in the drawings, it is preferable that a closed space is formed for each temperature-controlled area in order to control a temperature in the temperature-controlled area, and a heat insulating material is provided to surround the space.

A method for controlling a temperature of the entire or a part of the sample disk 11 has been described above with reference to FIGS. 15 to 17. Alternatively, a temperature-controlled area may be formed on an inner periphery of the sample disk 11 as shown in FIG. 18 without using the temperature control method.

Next, a flow from specimen dispensing to measurement by the coagulation time measurement unit 40 in the case where the temperature-controlled mechanism is provided in the reaction vessel storage section 30 in Embodiment 1, and a flow from specimen dispensing to the measurement by the coagulation time measurement unit 40 in the case where the temperature-controlled mechanism is provided in the sample disk 11 in Embodiment 2 will be described using a cross-mixing test requiring incubation of a specimen as an example. The cross-mixing test is a method for discriminating a cause of extension of blood coagulation time by addition of normal plasma. In the cross-mixing test, a mixed plasma is prepared by adding normal plasma to a test plasma as a specimen and mixing the test plasma and the normal plasma such that a ratio of the normal plasma becomes a plurality of patterns (0%, 10%, 20%, 50%, 80%, 90%, and 100%). A degree of correction of the blood coagulation time of the test plasma by addition of the normal plasma is determined by creating a graph in which a relation between a measurement result (blood coagulation time) and a proportion of the normal plasma is plotted. In a defective type, prolongation of APTT is corrected by addition of the normal plasma, and a downward convex pattern is shown. On the other hand, in an inhibitor type, the prolongation of APTT is hardly corrected even when the normal plasma is added, and an upward convex pattern is shown. However, a reaction of an inhibitor to a VIII factor has a dependence on a time and a temperature. Therefore, a shape protruding upward is not clearly shown in the reaction (hereinafter, referred to as "immediate reaction") immediately after mixing (mix), and a shape protruding upward may be shown in a reaction (hereinafter, referred to as "delay reaction") after incubation at 37°C for a certain period of time. Therefore, in the cross-mixing test, it is recommended to measure both the immediate reaction and the delay reaction.

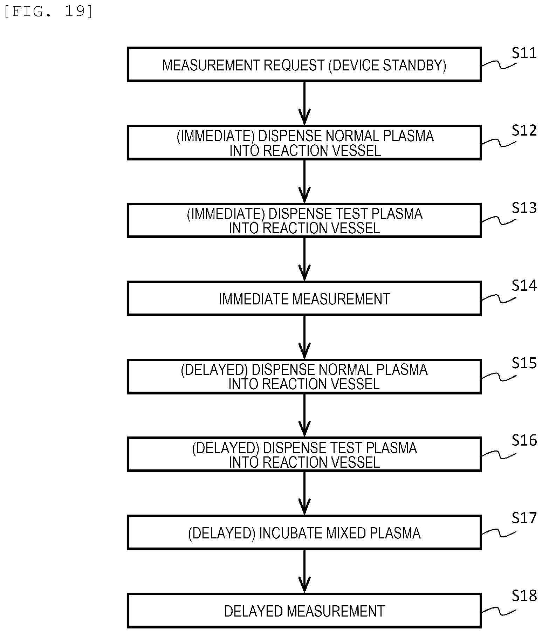

The flow from specimen dispensing to measurement by the coagulation time measurement unit 40 in the case (Embodiment 1) where the temperature-controlled mechanism is provided in the reaction vessel storage section 30 will be described with reference to a flowchart in FIG. 19.

The automatic analysis device 1 (1b) receives a cross-mixing test request (S11). First, from sample preparation to analysis for immediate measurement for measuring the immediate reaction are performed (S12 to S14). First, a normal plasma is aspirated by the sample dispensing mechanism 10 from the sample vessel 12 containing a normal plasma placed on the sample disk 11, and the normal plasma is discharged from a reaction vessel storage container to the empty reaction vessel 31 transferred to the coagulation specimen dispensing unit 43. At this time, the required amount of mixed plasma and the normal plasma are discharged (S12). Next, a test plasma is aspirated by the sample dispensing mechanism 10 from the sample vessel 12 containing a test plasma placed on the sample disk 11, and the test plasma is discharged to the reaction vessel 31 to which the normal plasma is discharged in step S12 so as to form a mixed plasma having a prescribed proportion of the test plasma (S13). Next, the reaction vessel 31 in which the mixed plasma is prepared is transferred to the coagulation time measurement unit 40 by the transfer device 32, the reaction vessel 31 in which the mixed plasma prepared for the immediate measurement is contained is irradiated with light from the light source 42, and the light scattered in the reaction vessel 31 is detected by the coagulation time detection unit 41 (S14).

Subsequently, from sample preparation to analysis for delayed measurement for measuring the delay reaction are performed (S15 to S18). Similarly to the immediate measurement, a normal plasma is aspirated by the sample dispensing mechanism 10 from the sample vessel 12 containing a normal plasma placed on the sample disk 11, and the normal plasma is discharged from a reaction vessel storage container to the empty reaction vessel 31 transferred to the coagulation specimen dispensing unit 43. At this time, the normal plasma is discharged in an amount corresponding to the required amount of mixed plasma (S15). Next, a test plasma is aspirated by the sample dispensing mechanism 10 from the sample vessel 12 containing a test plasma placed on the sample disk 11, and the test plasma is discharged to the reaction vessel 31 to which the normal plasma is discharged in step S15 so as to form a mixed plasma having a prescribed proportion of the test plasma (S16). In a case of the delayed measurement, the mixed plasma is incubated at 37°C for a certain period of time. Therefore, the reaction vessel 31 in which the mixed plasma is prepared is transferred to the reaction vessel storage section 30 having the temperature-controlled mechanism by the transfer device 32, and the reaction vessel 31 is provided in the reaction vessel storage container. Accordingly, the mixed plasma in the reaction vessel 31 is incubated (S17).

When a certain period of time elapses after the reaction vessel 31 is transferred to the reaction vessel storage section 30 and the incubation of the mixed plasma is completed, the delayed measurement is performed. Since a control unit 52 detects that the incubation has been performed for a certain period of time, it is possible to automatically perform the delayed measurement after the incubation without requiring any action from a user. Alternatively, although this requires some action from the user, the delayed measurement may be performed in response to a user instruction as a trigger. In this case, the control unit 52 may notify that the required incubation time has elapsed. The reaction vessel 31 in which the incubation is completed is transferred from the reaction vessel storage section 30 to the coagulation time measurement unit 40 by the transfer device 32, the reaction vessel 31 containing a mixed plasma prepared for the delayed measurement and for which incubation has been completed is irradiated with light from the light source 42, and the light scattered in the reaction vessel 31 is detected by the coagulation time detection unit 41 (S18).

In the present flowchart, an example has been described in which the mixed plasma for delayed measurement is prepared after preparation of the mixed plasma for the immediate measurement and measurement of the immediate reaction are performed. The invention is not limited thereto, and the mixed plasma for the delayed measurement may be prepared at the timing of preparation of the mixed plasma for the immediate measurement.

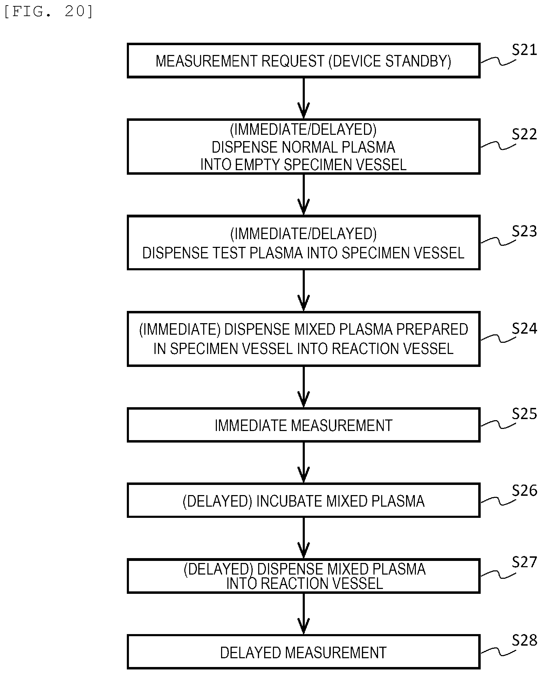

In comparison, the flow from specimen dispensing to measurement by the coagulation time measurement unit 40 in the case (Embodiment 2) where the temperature-controlled mechanism is provided in the sample disk 11 will be described with reference to a flowchart in FIG. 20.

The automatic analysis device 1 (1b) receives a cross-mixing test request (S21). When incubation is performed in the sample disk 11, the mixed plasma for the immediate measurement and the delayed measurement is prepared in the same vessel. The normal plasma is aspirated by the sample dispensing mechanism 10 from the sample vessel 12 containing the normal plasma placed on the sample disk 11, and the normal plasma for the immediate measurement and the delayed measurement is discharged to the empty sample vessel 12 placed on the sample disk 11. At this time, the normal plasma is discharged to the empty sample vessel 12 in an amount corresponding to the required amount of mixed plasma (S22). Next, a test plasma is aspirated by the sample dispensing mechanism 10 from the sample vessel 12 containing a test plasma placed on the sample disk 11, and the test plasma is discharged to the sample vessel 12 to which the normal plasma is discharged in step S22 so as to form a mixed plasma having a prescribed proportion of the test plasma (S23). The mixed plasma prepared in the sample vessel 12 is aspirated from the sample vessel 12 by the sample dispensing mechanism 10 and discharged from the reaction vessel storage container to the empty reaction vessel 31 transferred to the coagulation specimen dispensing unit 43 (S24). Next, the reaction vessel 31 to which the mixed plasma has been discharged is transferred to the coagulation time measurement unit 40 by the transfer device 32, the reaction vessel 31 is irradiated with light from the light source 42, and the light scattered in the reaction vessel 31 is detected by the coagulation time detection unit 41 (S25).

A remaining mixed plasma used for the immediate measurement is used for the delayed measurement. Therefore, a temperature of the sample vessel 12 containing the remaining mixed plasma is controlled by the sample disk 11 as it is, and the mixed plasma in the sample vessel 12 is incubated (S26). Regarding the temperature control in the sample disk 11, the temperature control of the temperature-controlled area may be started at a temperature control timing of the mixed plasma for the delayed measurement, or the sample vessel 12 may be manually provided in a temperature-controlled area controlled to 37°C in advance by a transfer mechanism or a user. When the incubation of the mixed plasma is completed, in order to perform measurement, the incubated mixed plasma is aspirated from the sample vessel 12 by the sample dispensing mechanism 10, and is discharged from the reaction vessel storage container 30a to the empty reaction vessel 31 transferred to the coagulation specimen dispensing unit 43 (S27). In step S27, the control unit 52 detects that the incubation has been performed for a certain period of time, so that it is possible to automatically perform step S27 after the incubation without requiring any action from a user. Alternatively, although this requires some action from the user, step S27 may be performed in response to a user instruction as a trigger. In this case, the control unit 52 may notify that the required incubation time has elapsed.

Subsequently, the reaction vessel 31 to which the mixed plasma is discharged is transferred to the coagulation time measurement unit 40 by the transfer device 32, the reaction vessel 31 in which the mixed plasma for delayed measurement is contained is irradiated with light from the light source 42, and the light scattered in the reaction vessel 31 is detected by the coagulation time detection unit 41 (S28).

A graph of the immediate measurement and the delayed measurement is created using measurement results in the flows in FIG. 19 or FIG. 20, and a user determines a cause of delay based on the created graph.

As described with reference to FIG. 19, when the mixed plasma for the delayed measurement is incubated in the reaction vessel storage section 30, the mixed plasma for the immediate measurement and the mixed plasma for the delayed measurement are prepared in separate containers. On the other hand, as described with reference to FIG. 20, when the mixed plasma for the delayed measurement is incubated on the sample disk 11 (Embodiment 2), the mixed plasma for the immediate measurement and the mixed plasma for the delayed measurement can be collectively prepared in one sample vessel 12. Therefore, the same specimen can be used for the immediate measurement and the delayed measurement. That is, since there is no influence of a dispensing error of the sample dispensing mechanism 10, it is possible to more accurately compare a result of the immediate measurement with a result of the delayed measurement. In the automatic analysis device in Embodiment 2, the above effect cannot be attained, but the mixed plasma for the delayed measurement and the mixed plasma for the delayed measurement may be prepared in separate sample vessels 12 and measured.

In comparison, when the mixed plasma for the delayed measurement is incubated in the reaction vessel storage section 30, the mixed plasma is directly prepared in the reaction vessel 31. On the other hand, when the mixed plasma for the delayed measurement is incubated on the sample disk 11, the mixed plasma is once prepared in the sample vessel 12, and then the prepared mixed plasma is dispensed into the reaction vessel 31. Therefore, when controlling the temperature of the sample disk 11, more dispensing operations are required at one time and a larger amount of specimen is required, compared with when controlling the temperature of the reaction vessel storage section 30. That is, when the reaction vessel storage section 30 is provided with the temperature-controlled mechanism (Embodiment 1), cross mixing can be analyzed with a smaller amount of specimen than when the temperature of the sample disk 11 is controlled.

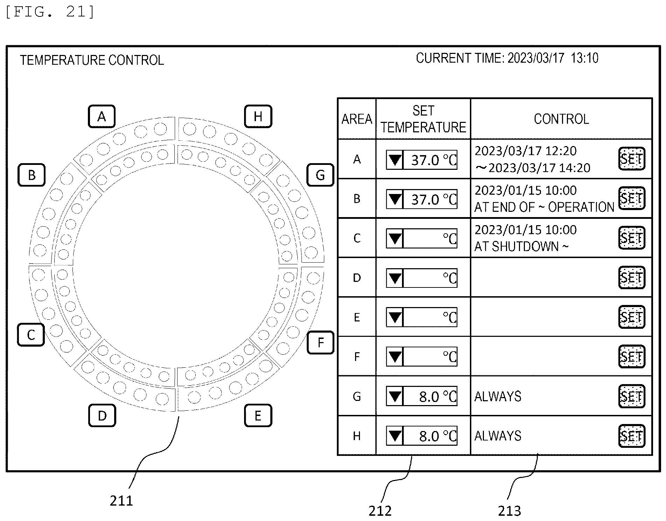

The temperature control of the sample disk 11 may be freely set by the user. FIG. 21 shows an example of a temperature control setting screen displayed on the display device 54. The setting screen includes a sample disk schematic diagram 211 divided into areas, a temperature setting unit 212 that inputs a set temperature for each area, and a control setting unit 213 that sets a period for which temperature control is to be performed at the temperature set by the temperature setting unit 212. The temperature control period and the set temperature can be freely set for each area, and may be set according to a use state of the automatic analysis device 1 (1b) by the user. Further, a temperature control position, a temperature, or an incubation elapsed time can be checked from this screen.

In order to clarify a correspondence relation between area names A to H of the sample disk schematic diagram 211 and the sample disk 11 of the automatic analysis device 1 (1b), it is desirable that the area number of the sample disk schematic diagram 211 is displayed on the sample disk 11 and the position number of the sample vessel 12 displayed on the sample disk 11 is also displayed on the sample disk schematic diagram 211.

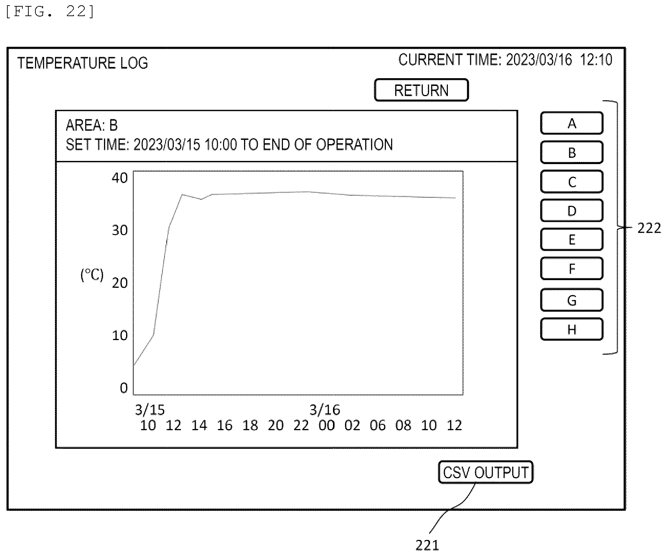

Further, when the area names of the sample disk schematic diagram 211 in FIG. 21 are clicked, the screen transitions to a temperature log screen shown in FIG. 22, and a temperature log of the selected area can be checked. FIG. 22 is an example of a display screen when an area B is selected. Since the temperature log may be used as evidence of an experimental result, temperature log data may be output by pressing a CSV output button 221. When an area selection button 222 is clicked, the temperature log data for each area can be switched and displayed without returning to the setting screen (FIG. 21).

Although FIG. 21 shows an example of the setting screen when the temperature-controlled area is set in the entire sample disk, the setting screen is displayed according to an actual temperature-controlled area. For example, when a temperature of the entire sample disk is controlled in one temperature-controlled area, only the area A is used, and the temperature setting unit 212 and the control setting unit 213 also correspond to the only area A. When the temperature-controlled area is formed only in a part of the sample disk, an area is set in the sample disk schematic diagram 211 with respect to a position where the temperature-controlled area is formed, and the temperature setting unit 212 and the control setting unit 213 corresponding to the set area are displayed. Further, as shown in FIG. 15, when the flow path of the thermostatic chamber 80 is extended to control a temperature of a sample disk, a set temperature and a control method cannot be changed, and thus the temperature log in FIG. 22 alone may be displayed.

The invention is not limited to the embodiments described above, and includes various modifications. For example, the embodiments and the modification described above have been described in detail to facilitate understanding of the invention, and the invention is not necessarily limited to those including all the configurations described above. A part of the configuration of one embodiment and modification can be replaced with the configuration of another embodiment and modification, and the configuration of one embodiment and modification can be added to the configuration of another embodiment and modification. A part of a configuration in each of the embodiment and the modification may be added to, deleted from, or replaced with another configuration.

### Reference Signs List

1, 1b: automatic analysis device
10: sample dispensing mechanism
11: sample disk
12: sample vessel
20: coagulation reagent dispensing mechanism
21: reagent disk
22: reagent vessel
23: reagent heating mechanism
30: reaction vessel storage section
30a: reaction vessel storage container
31: reaction vessel
32: transfer device
34: reaction vessel discarding unit
35: specimen-containing reaction vessel
40: coagulation time measurement unit
41: coagulation time detection unit
42: light source
43: coagulation specimen dispensing unit
50: interface
51: keyboard
52: computer (control unit)
53: printer
54: display device
55: memory
56: A/D converter
57: specimen dispensing control unit
58: coagulation reagent dispensing control unit
59: transfer device control unit
60: reaction disk
61: reagent dispensing mechanism
62: reaction cell (second reaction vessel)
70: storage section lid
71: slide rail
72: motor
73: cylinder
74: knob
80: thermostatic chamber
81: heater
82: filter
83: circulation pump
84, 161: heater
85, 162: blower
86, 163: temperature sensor
87, 164: heater control unit
88, 171a, 171b, 171c: electric heater
89, 172a, 172b, 172c, 172d: temperature sensor
90, 173a, 173b, 173c, 173d: heater control unit
174: Peltier element
211: sample disk schematic diagram
212: temperature setting unit
213: control setting unit
221: CSV output button
222: area selection button

## Claims

1. An automatic analysis device comprising:
a reaction vessel storage section where a reaction vessel storage container that stores a reaction vessel is to be provided; and
a dispensing mechanism configured to dispense a specimen or a reagent into a reaction vessel removed from the reaction vessel storage container, wherein
the reaction vessel storage section has a temperature-controlled area where at least a portion of the reaction vessel storage section is adjusted to a prescribed temperature, and
the reaction vessel into which the specimen or the reagent is dispensed by the dispensing mechanism is placed in a reaction vessel storage container provided in the temperature-controlled area for a prescribed period.

2. The automatic analysis device according to claim 1, further comprising:
a dispensing position configured to dispense the specimen and the reagent into the reaction vessel; and
a transfer device configured to grip and transfer the reaction vessel, wherein
the dispensing mechanism is a specimen dispensing mechanism that dispenses a specimen,
the transfer device transfers an empty reaction vessel from the reaction vessel storage container to the dispensing position, and
the transfer device transfers the reaction vessel at the dispensing position to the reaction vessel storage container provided in the temperature-controlled area after the specimen is dispensed into the reaction vessel transferred to the dispensing position by the specimen dispensing mechanism.

3. The automatic analysis device according to claim 2, wherein
the transfer device transfers an empty reaction vessel to the corresponding empty reaction vessel storage position when the reaction vessel storage position of the reaction vessel storage container provided in the temperature-controlled area is empty.

4. The automatic analysis device according to claim 3, wherein
in the reaction vessel storage section, a first reaction vessel storage container is provided in the temperature-controlled area, and a second reaction vessel storage container is provided outside the temperature-controlled area, and
the transfer device transfers an empty reaction vessel from the second reaction vessel storage container to an empty reaction vessel storage position of the first reaction vessel storage container when the reaction vessel storage position of the first reaction vessel storage container is empty.

5. The automatic analysis device according to claim 2, further comprising:
a coagulation time detection unit configured to perform blood coagulation measurement; and
a coagulation reagent dispensing mechanism including a reagent heating mechanism, wherein
the transfer device transfers a reaction vessel that is placed on the reaction vessel storage container provided in the temperature-controlled area to the coagulation time detection unit after the prescribed period has elapsed, and
the coagulation reagent dispensing mechanism dispenses the heated reagent into the reaction vessel transferred to the coagulation time detection unit.

6. The automatic analysis device according to claim 5, further comprising:
a measurement unit configured to perform biochemical measurement;
a reaction disk on which a plurality of reaction cells used for the biochemical measurement are provided;
a thermostatic chamber configured to adjust the plurality of reaction cells to a prescribed temperature; and
a flow path configured to heat and circulate system water in the thermostatic chamber, wherein
the temperature-controlled area is heated by the system water in the flow path.

7. The automatic analysis device according to claim 1, further comprising:
a heater configured to heat the temperature-controlled area;
a temperature sensor configured to measure a temperature of the temperature-controlled area; and
a heater control unit configured to control a temperature of the heater based on the temperature measured by the temperature sensor.

8. The automatic analysis device according to claim 7, wherein
the heater control unit stops the heating by the heater when heating of the reaction vessel is unnecessary.

9. The automatic analysis device according to claim 2, wherein
the reaction vessel storage section includes a lid covering at least a part of the temperature-controlled area, and
a reaction vessel at the dispensing position is transferred to a reaction vessel storage position covered with the lid of a reaction vessel storage container provided in the temperature-controlled area.

10. The automatic analysis device according to claim 9, wherein
the lid is heated to a temperature of the temperature-controlled area, or a heat insulating material is provided on a surface of the lid facing the reaction vessel storage container.

11. The automatic analysis device according to claim 9, wherein
the reaction vessel storage section includes a drive mechanism configured to move the lid between a standby position and the temperature-controlled area.

12. The automatic analysis device according to claim 9, wherein
the transfer device moves the lid between a standby position and the temperature-controlled area.

13. The automatic analysis device according to claim 2, wherein
the transfer device transfers an empty reaction vessel to overlap the reaction vessel transferred from the dispensing position to the reaction vessel storage container provided in the temperature-controlled area.

14. An automatic analysis device comprising:
a sample disk on which a plurality of sample vessels including a first sample vessel are placed;
a dispensing mechanism configured to discharge any liquid of a specimen, a mixed specimen, a reagent, and a mixed liquid of the reagent and the specimen into the first sample vessel; and
a control unit, wherein
the sample disk has a temperature-controlled area in which at least a part of the sample disk is adjusted to a prescribed temperature, and
the control unit causes the dispensing mechanism to aspirate the liquid in the first sample vessel after a prescribed period elapses after the first sample vessel to which the liquid is discharged is placed in the temperature-controlled area.

15. The automatic analysis device according to claim 14, wherein
the sample disk includes a plurality of temperature-controlled areas each capable of setting the prescribed temperature to be adjusted.

16. The automatic analysis device according to claim 14, wherein
a second sample vessel that contains normal plasma and a third sample vessel that contains test plasma are placed on the sample disk,
the first sample vessel is placed on the sample disk as an empty sample vessel, and
the control unit prepares mixed plasma by dispensing the normal plasma from the second sample vessel to the first sample vessel by the dispensing mechanism and dispensing the test plasma from the third sample vessel to the first sample vessel by the dispensing mechanism.

17. The automatic analysis device according to claim 16, wherein
the mixed plasma prepared in the first sample vessel is used for immediate and delayed coagulation time measurement, and
the control unit uses the mixed plasma prepared in the first sample vessel for immediate coagulation time measurement and uses the mixed plasma prepared in the first sample vessel for delayed coagulation time measurement after a prescribed period has elapsed in the temperature-controlled area.
